# EUROPEAN PATENT SPECIFICATION

(11) **EP 1 070 912 B1**
(45) Date of publication and mention of the grant of the patent: **20.05.2009**
(21) Application number: 00115664.5
(22) Date of filing: 20.07.2000
(51) Int. Cl.: F21V 7/04, F21W 101/10

(54) **Headlamp and method for manufacturing reflector in the headlamp**
Scheinwerfer und Auslegungsverfahren für seinen Reflektor
Projecteur et procédé d'agencement pour son réflecteur

(30) Priority: 23.07.1999 JP 20933199
(43) Date of publication of application: 24.01.2001
(73) Proprietor: ICHIKOH INDUSTRIES LIMITED, Shinagawa-ku, Tokyo 141-8627 (JP)
(72) Inventor: Nakata, Yutaka, c/o Ichikoh Industries Ltd., Isehara-shi, Kanagawa-ken, 259-1192 (JP)
(74) Representative: Grünecker, Kinkeldey, Stockmair & Schwanhäusser Anwaltssozietät

(56) References cited:
- FR-A- 2 744 199
- US-A- 4 481 563
- US-A- 5 204 820
- US-A- 5 440 456
- ROBERT J. DONOHUE AND BERNARD W. JOSEPH: "Computer synthesized filament images from reflectors and through lens elements for lamp design and evaluation" APPLIED OPTICS, vol. 14, no. 10, October 1975 (1975-10), pages 2384-2390, XP007901136

## Description

### BACKGROUND OF THE INVENTION

The present invention relates to a design method for designing the reflection surface of the reflector of a headlamp where control on a pattern of brightness-intensity distribution is performed mainly by said reflector.

There have been known a headlamp which uses a flat lens. However, the headlamp uses the flat lens, and the inside (lamp chamber) of the headlamp can be seen clearly through the flat lens. The inside can be seen clearly, and it is necessary to finish the interior of the lamp chamber politely, and correspondingly the inside finishing is complicated.

Also, since the reflected light reflected and controlled by the reflector is allowed to pass through the flat lens as it is without controlling the reflected light, the degree of freedom on the optical system design is small.

### SUMMARY OF THE INVENTION

An object of the present invention is to provide a design method which provides a headlamp whose inside is made difficult to see to some extent without losing a high brightness feeling of inside metal and whose degree of freedom is large on an optical system design. Document US-5 204 820-A shows such a method.

In order to achieve the above object, a method as defined in claim 1 is provided.

According to the inventive method , the reflector (6, 7) for a headlamp whose inside is made difficult to see to some extent without losing a high brightness feeling of inside metal and whose degree of freedom is large on an optical system design can be manufactured. In addition, the reflector (6, 7) for the above-mentioned headlamp can be manufactured with a high accuracy, at a high speed and with a high degree of freedom by performing the provisionally setting step of the reflector (2), the displacement calculating step and the primarily setting step of the reflector (6, 7) according to a predetermined program in a computer.

In other words, the target brightness-intensity distribution pattern can be obtained by a reflection surface of the reflector (2) manufactured according to a general expression and parametric functions which have been changed on the basis of the general expression of the equation (1) and the parametric functions of the equation (2).

### BRIEF DESCRIPTION OF THE DRAWINGS

Fig. 1A is an explanatory diagram showing a concept of the present invention in a case that a concave lens is used, and Fig. 1B is an explanatory diagram showing a concept of the present invention in a case that a convex lens is used;
Figs. 2A to 2F are explanatory diagrams of brightness-intensity distribution patterns which are obtained by the concave lens shown in Fig. 1A and a reflector shown in Figs. 8 and 9 and where brightness-intensity distribution patterns have been obtained by simulation of a computer are simplified;
Figs. 3A to 3F are explanatory diagrams of brightness-intensity distribution patterns which are obtained by the convex lens shown in Fig. 1B and a reflector shown in Figs. 8 and 9 and where brightness-intensity distribution patterns have been obtained by simulation of a computer are simplified;
Figs. 4A and 4B show one embodiment of a headlamp of the present invention, Fig. 4A being a schematic sectional view in a case that a concave lens has been used and Fig. 4B being a schematic sectional view in a case that a convex lens has been used;
Fig. 5 is a flowchart showing one embodiment of a method for manufacturing a reflector in the headlamp of the present invention;
Figs. 6A to 6D are explanatory diagrams showing data to be input in simulation for optical system design, Fig. 6A being a front view, Fig. 6B being a sectional view taken along line B-B in Fig. 6A, Fig. 6C being a sectional view taken along line C-C in Fig. 6A, and Fig. 6D being an enlarged view of a D portion in Fig. 6C;
Figs. 7A and 7B are a modified embodiment of a headlamp of the present invention, Fig. 7A being a front view and Fig. 7B being a sectional view taken along line B-B in Fig. 7A;
Fig. 8 is a schematic longitudinal sectional view of a conventional headlamp where a flat lens has been used;
Fig. 9 is a surface view of a reflector of the conventional headlamp;
Fig. 10 is a predetermined brightness-intensity distribution pattern diagram (equibrightness curve diagram) of a low light rays;
Figs. 11A to 11F are explanatory diagrams of brightness-intensity distribution patterns which are obtained by a flat lens shown in Fig. 8 and a reflector shown in Figs. 8 and 9 and where brightness-intensity distribution patterns have been obtained by simulation of a computer are simplified.
Fig. 12 is a perspective view of an automobile to which a headlamp according to the invention is adapted;
Fig. 13 shows size data of a reflector;
Fig. 14 shows size data of a light source;
Fig. 15 shows size data of respective lenses;
Fig. 16 shows a simulation result for a flat lens;
Fig. 17 shows a simulation result for a concave lens;
Fig. 18 shows a simulation result for a convex lens;
Fig. 19 shows a comparison of a flat lens, a concave lens, and convex lens;
Fig. 20 shows an expression (1); and
Fig. 21 shows expressions (2).

### DETAILED DESCRIPTION OF THE PREFERRED EMBODIMENT

Firstly, a comprehension of the invention is explained.

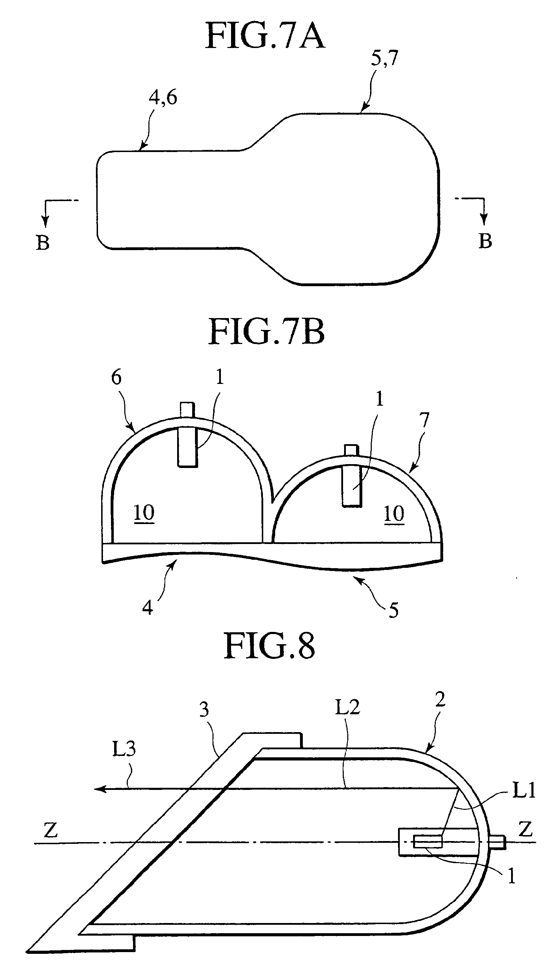

In Fig. 8, reference numeral 1 denotes a light source. A halogen lamp with a single filament or a double filament, an incandescent lamp, a discharge lamp and the like (so-called H1, H3, H4, H7, H11, and the like) can be used as the light source 1. The light source 1 is disposed in a lamp chamber 10 described later.

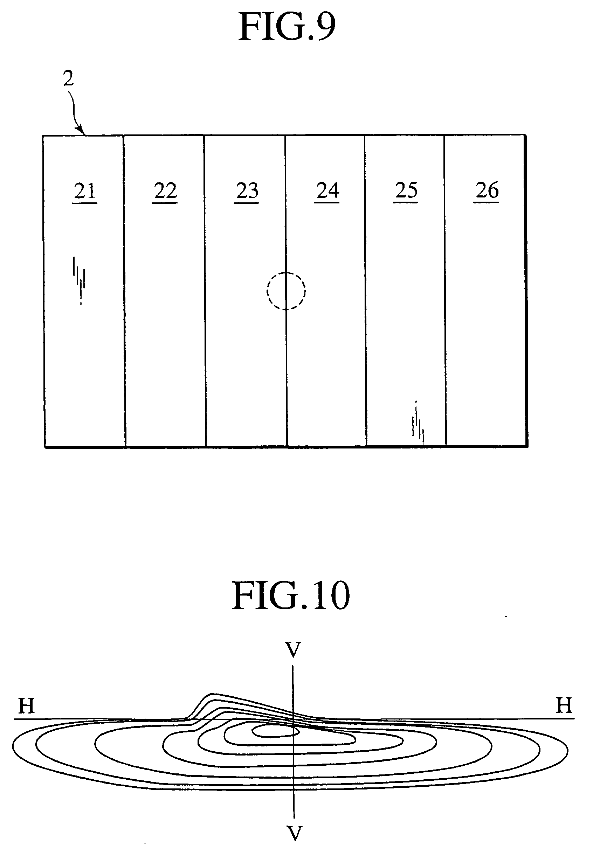

In Fig. 8, reference numeral 2 denotes a reflector. The reflector 2 has a reflection surface of free curved surfaces combined compositionally. The reflection surface of the reflector 2 develops a high brightness feeling of metal by aluminum deposition, silver coating or the like. Also, as shown in Fig. 9, the reflector 2 in this example is vertically divided into 6 pieces. There are a case that boundary lines (seams) of reflection surface blocks (or reflection surface segments) 21, 22, 23, 24, 25 and 26 (21 to 26) can be seen because the reflection surface blocks 21 to 26 are independent from one another, as shown in Fig. 9, and a case that the lines can not be seen because the reflection surface blocks 21 to 26 are continuous. Also, in the reflector 2, the reflector surface blocks are formed by dividing the reflector surface in a vertical direction. However, the reflector surface may be divided in a horizontal direction or a radial direction, or it may be formed by combining a vertical direction division, a horizontal direction division and a radial direction division appropriately. That is, taking a design for the reflector into consideration, the reflection surface of the reflector 2 is divided in blocks.

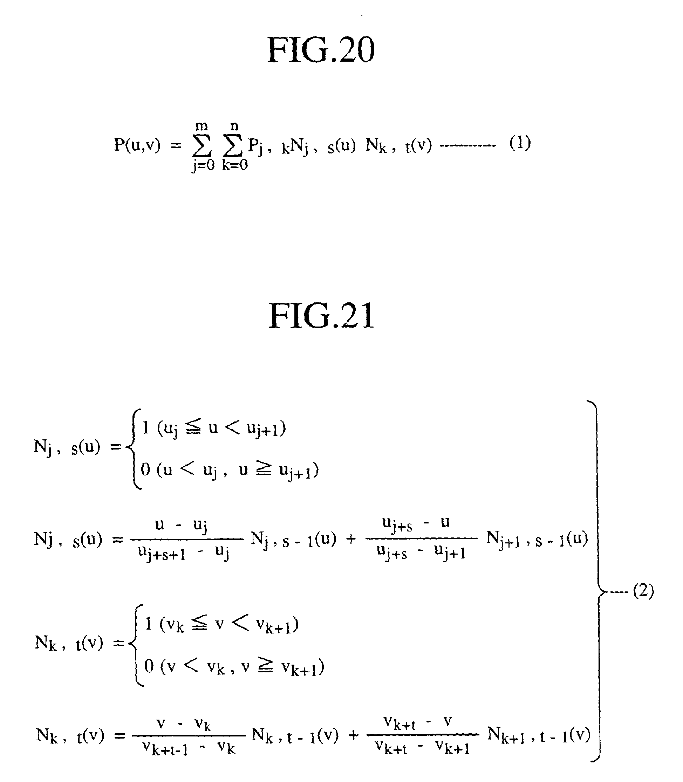

The detail of the reflector 2 comprising the above-mentioned free curved surfaces has been described, for example in "Mathematical Elements for Computer Graphics" (Devid F. Rogers, J Alan Adams). That is, in a case where a flat lens 3 described later has been used, the reflection surface of the above-mentioned reflector 2 can be obtained according to a general expression of the expression (1) as shown in Fig. 20.

The expressions (2), as shown in Fig. 21, are shown as parametric functions of the general expression of the following expression (1). A specific reflection surface of the above-mentioned reflector 2 in the case that the flat lens 3 described later has been used can be obtained by substituting specific numerical values, for example, points on a paraboloid for the parametric functions of the expressions (2).

The focus F of the reflector 2 is not a single focus in a strict sense, but because displacements in focal distance are only slight among the plurality of reflection surfaces and the reflection surfaces share an approximately identical focus, the approximately identical focus is called as a pseudo-focus (or simply focus) in this specification. Similarly, the optical axis Z-Z of the reflector 2 is not a single optical axis in a restrict sense. Since displacements in optical axis are only slight among them and the optical axis has the approximately identical optical axis, the approximately same optical axis is called a pseudo-optical axis (or simply optical axis) Z-Z in the present specification and the drawings.

Incidentally, the reflector 2 is integrated with a lamp housing, but it may be a member different from the lamp housing.

In Fig. 8, reference numeral 3 denotes a lens. The lens 3 is a flat lens whose inner surface and outer surface are substantially parallel to each other, so-called plain lens (which is called flat lens in this specification). Incidentally, the inner surface and the outer surface of the flat lens 3 may be plain surfaces or curved surfaces. A lamp chamber 10 is defined by the flat lens 3 and the above-mentioned reflector 2.

When the light source 1 is turned on, light L1 from the light source 1 is reflected by the reflector 2 and the reflected light L2 is irradiated as projecting light L3 with a predetermined brightness-intensity distribution pattern through the flat lens 3 outside. Here, the predetermined brightness-intensity distribution pattern means a brightness-intensity distribution pattern satisfying such a standard of brightness-intensity distribution as EC brightness-intensity distribution standard ECEReg., or a standard corresponding thereto (for example, Japanese type approval standard or the like), North American brightness-intensity distribution standard FMVSS or the like. The predetermined brightness-intensity distribution pattern in this example is a brightness-intensity distribution pattern of a low light rays, as shown in Fig. 10. The brightness-intensity distribution pattern of the low light rays shown here is one for a headlamp equipped in a vehicle for a left side running division. A brightness-intensity distribution pattern of a low light rays of a head lamp equipped with a vehicle for a right side running division is reversed to the brightness-intensity distribution pattern of the low light rays shown regarding left and right sides.

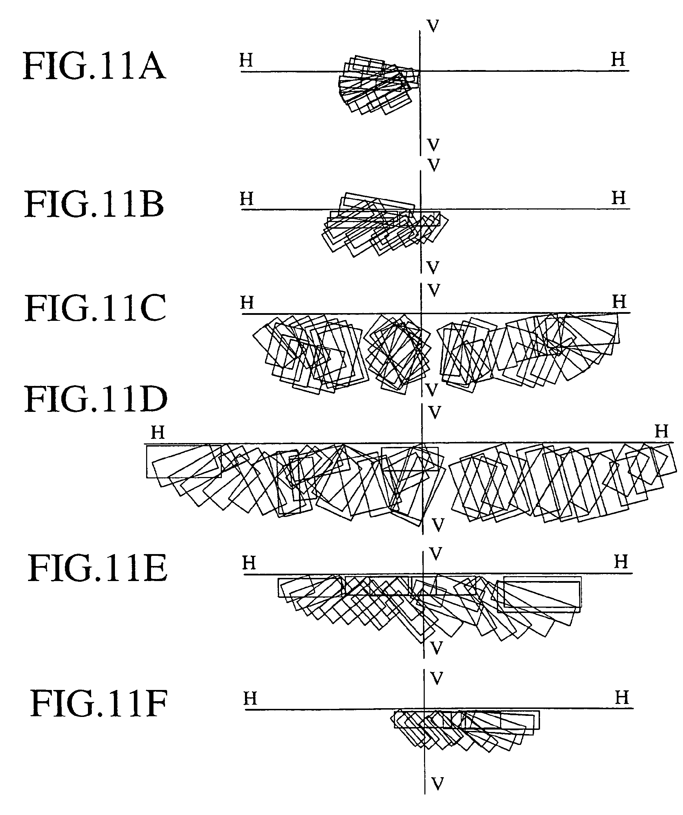

A predetermined brightness-intensity distribution pattern of the low light rays shown in Fig. 10 is controlled by the respective reflection surface blocks 21 to 26 of the reflector 2. That is, in the reflector 2 shown in Fig. 9, a brightness-intensity distribution pattern shown in Fig. 11A is controlled by the reflection surface block 21 positioned at the first position from the left side. A brightness-intensity distribution pattern shown in Fig. 11B is controlled by the reflection surface block 22 positioned at the second position from the left side. A brightness-intensity distribution pattern shown in Fig. 11C is controlled by the reflection surface block 23 positioned at the third position from the left side. A brightness-intensity distribution pattern shown in Fig. 11D is controlled by the reflection surface block 24 positioned at the fourth position from the left side. A brightness-intensity distribution pattern shown in Fig. 11E is controlled by the reflection surface block 25 positioned at the fifth position from the left side. A brightness-intensity distribution pattern shown in Fig. 11F is controlled by the reflection surface block 26 positioned at the sixth position from the left side. The brightness-intensity distribution patterns (Figs. 11A, 11B, 11C, 11D, 11E, and 11F) are synthesized so that the predetermined brightness-intensity distribution pattern of the low light rays shown in Fig. 10 can be obtained.

Incidentally, besides the brightness-intensity distribution pattern of the low light rays shown in Fig. 10, another predetermined brightness-intensity distribution pattern of a high light rays (not shown) can be obtained by a light source (not shown) for a high light rays and a reflector (not shown). Next, setting steps of a reflector are explained when a convex lens or a concave lens is adapted.

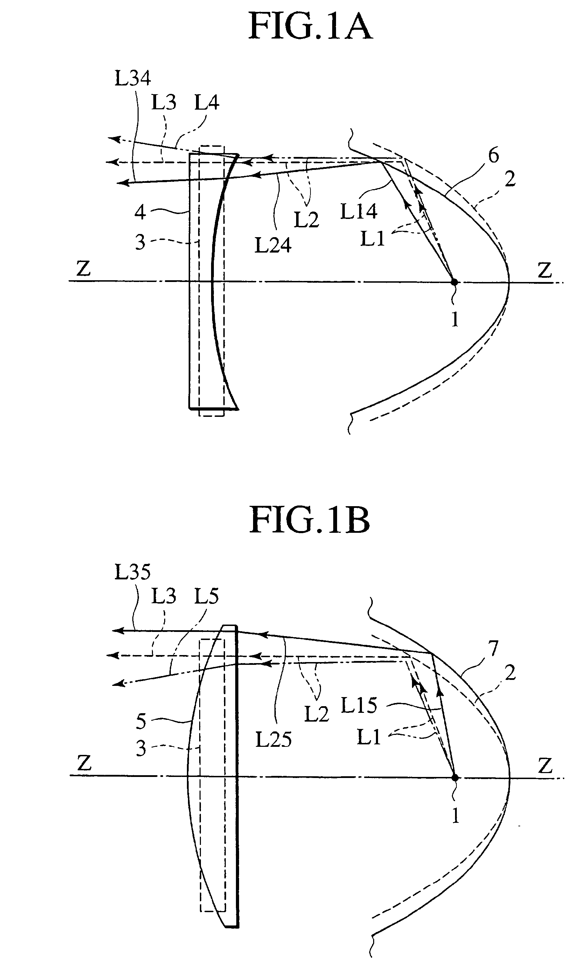

First, in Fig. 1, in the provisionally setting step for the reflector 2, the reflector 2 is provisionally set such that the target predetermined brightness-intensity distribution pattern (refer to Figs. 10 and 11) can be obtained by the flat lens 3 and the reflector 2 which are shown with broken lines. At this time, optical paths in the provisionally set reflector 2 and flat lens 3 become optical paths indicated with symbols L1, L2 and L3 and shown with broken line arrows.

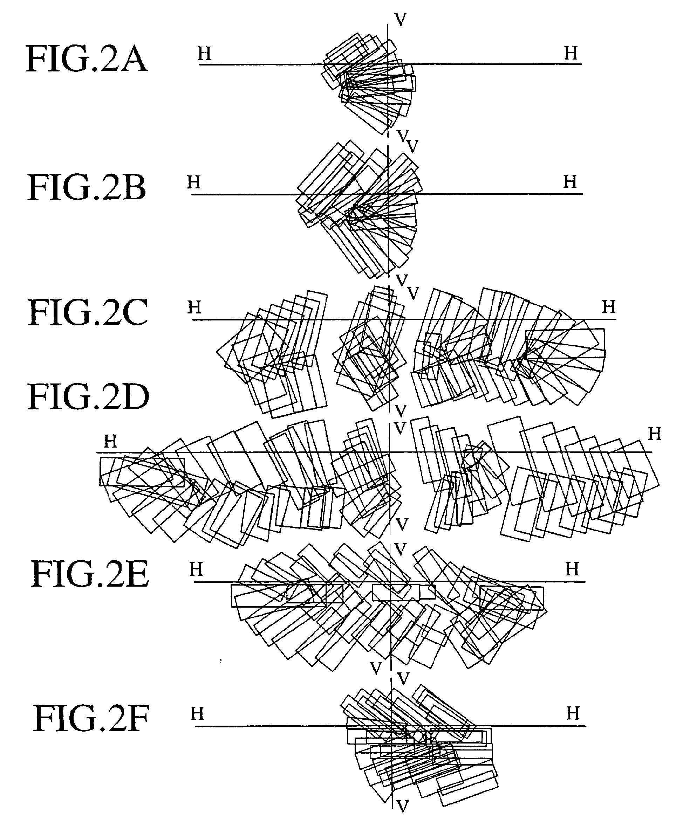

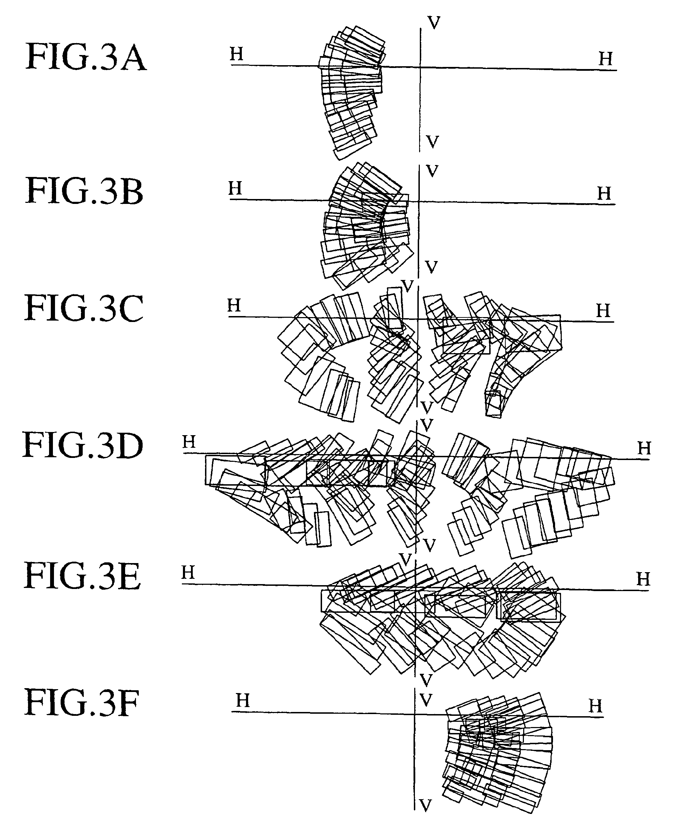

Next, in the displacement calculating step, the flat lens 3 is replaced with the concave lens 4 or the convex lens 5 shown with a solid line while the provisionally set reflector 2 is maintained as it is. The projecting light L4, L5 is refracted in the concave lens 4 or the convex lens 5, as shown with a double dotted line and indicated by symbols L1, L2, L4, L5. Accordingly, since the displacement occurs between the target brightness-intensity distribution pattern (refer to Fig. 11) obtained by the provisionally set reflector 2 and flat lens 3 and the brightness-intensity distribution pattern (refer to Figs. 2 and 3) obtained by the provisionally set reflector 2 and the concave lens 4 or the convex lens 5, it is calculated.

Then, in the primarily setting step of the reflector 6, 7, the reflector 6 for the concave lens 4, the reflector 7 for the convex lens 5 which is shown with a solid line is primarily set in place of the provisionally set reflector 2, so that the above-mentioned displacement becomes zero. That is, the projecting light L3 (a broken line arrow in Figs. 1A and 1B) obtained by the flat lens 3 and the provisionally set reflector 2, the projecting light L34 (a solid line in Fig. 1A) obtained by the concave lens 4 and the reflector 6, and the projecting light L35 (for example, a solid line in Fig. 1B) obtained by the convex lens 5 and the reflector 7 become approximately parallel to one another.

As a result, the optical path obtained by the concave lens 4 and the reflector 6 become the optical path shown with the solid line arrow and denoted by the symbols L14, L24, L34 in Fig. 1A. The optical path obtained by the convex lens 5 and the reflector 7 becomes the optical path shown with the solid lien arrow and denoted by the symbols L15, L25, L35 in Fig. 1B. Therefore, the above-mentioned displacement becomes 0. In this manner, the target predetermined brightness-intensity distribution pattern ( Figs. 10 and 11) can be obtained.

Incidentally, in Figs. 1, for interpreting the figures, the broken line arrow and the double dotted line arrow of the light L1 from the light source 1 and the reflected light L2 are shown in the figures in a separated manner, but they are actually positioned on the same optical path.

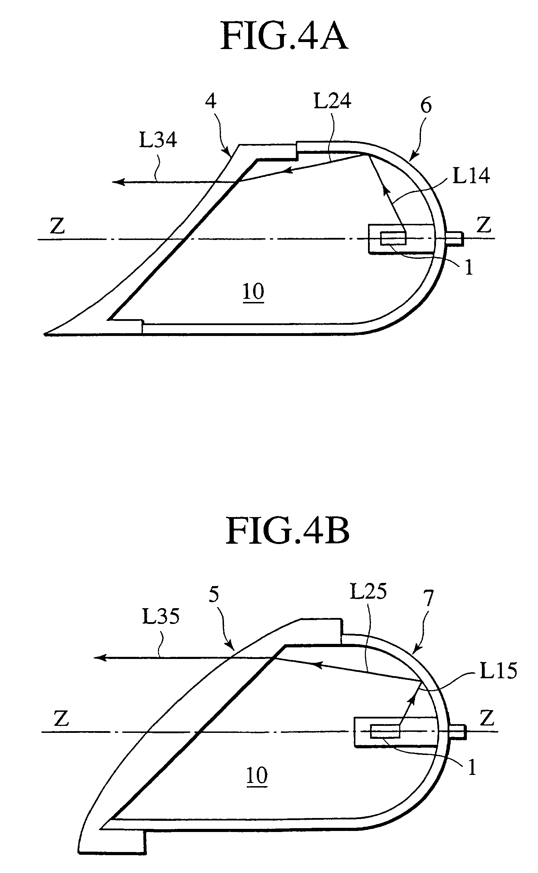

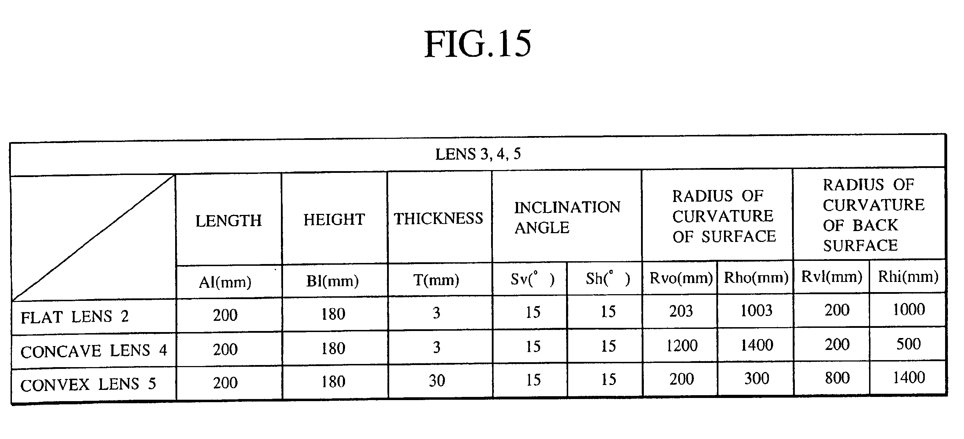

One embodiment of a headlamp of the present invention and a method for manufacturing a reflector for the headlamp will be explained with reference to Figs. 4 to 19.

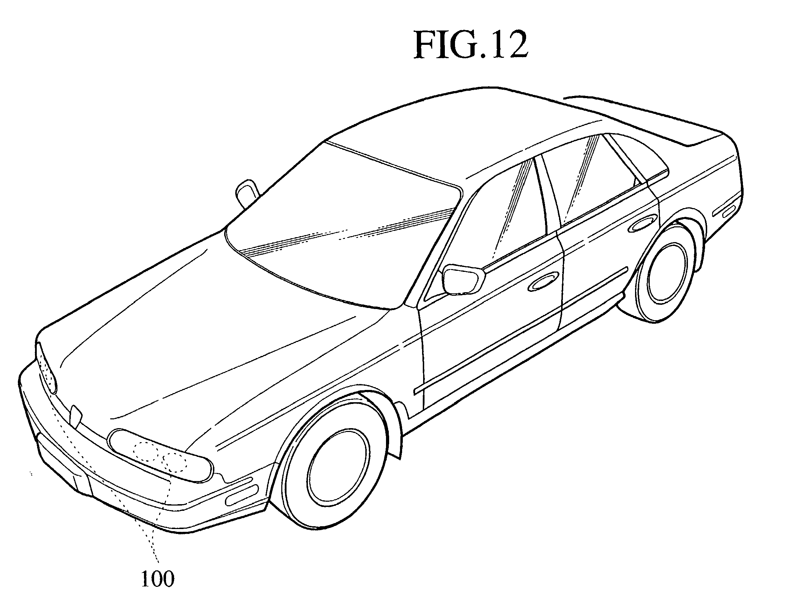

Incidentally, a headlamp 100 shown in Fig. 12 is one equipped on an automobile for a left side running division, and a headlamp equipped on an automobile for a right side running division is reversed to the shown headlamp regarding left and right sides.

Figs. 4A and 4B are schematic sectional views showing one embodiment of a headlamp of the present invention.

In Fig. 4A, a concave lens 4 is used as a lens. Also, a reflector 6 which can control projecting light L34 transmitted through the concave lens 4 to a predetermined brightness-intensity distribution pattern is used as a reflector.

Also, in Fig. 4B, a convex lens 5 is used as the lens. Also, a reflector 7 which can control projecting light L35 transmitted through the convex lens 5 to a predetermined brightness-intensity distribution pattern is used as the reflector.

A torus curved surface or a free curved surface is used for a surface (a surface positioned on a reverse side of a surface opposed to a lamp chamber 10) of the concave lens 4 or the convex lens 5 and a back surface (surface opposed to the lamp chamber 10) thereof. Also, a free curved surface is used for a surface (surface opposed to the lamp chamber 10, or reflection surface) of the reflector 6 or 7. Also, the reflector 6 or 7 comprises 6 vertically divided reflection surface blocks like the reflector 2 shown in Fig. 9. Incidentally, NURBS (Non-Uniform Rational B-Spline Surface) is used as the above-mentioned free curved surface.

Since the headlamp of the present invention in this embodiment is structured in the above manner, as shown in Figs. 4A and 4B, when the light source 1 is turned on, light L14, L15 from the light source 1 is reflected by the reflector 6 or 7. Reflected light L24, L25 is projected as projecting light L34, L35 in a predetermined brightness-intensity distribution pattern of a low light rays shown in Fig. 11 through the convex lens 4 or the concave lens 5 outside.

In this manner, since the headlamp of the present invention in this embodiment employs the concave lens 4 or the convex lens 5, when the interior of the lamp chamber 10 is seen through the concave lens 4 and the convex lens 5, it becomes difficult to see to some extent without losing a high brightness feeling of inside metal owing to refraction of light (refer to solid line arrows L24, L34, L25 and L35 in Fig. 4). Accordingly, it becomes unnecessary to perform an inside finishing so politely, and correspondingly the inside finishing can be performed easily. Also, since the reflected light L24, L25 which has been reflected and controlled by the reflector 6, 7 can be projected as the projecting lights L34, L35 outside by refracting and controlling them through the concave lens 4, the convex lens 5, the degree of freedom on optical system design is made larger than that in the flat lens 3.

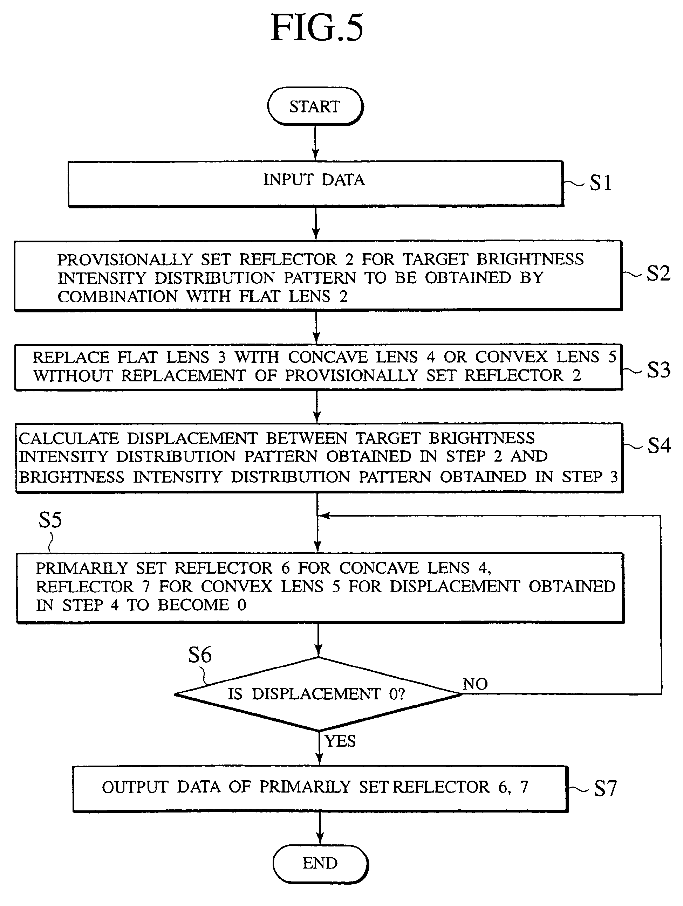

Fig. 5 is a flowchart showing one embodiment of a method for manufacturing a reflector in the headlamp of the present invention.

The embodiment of the method for manufacturing a reflector in the headlamp of the invention will be explained below with reference to Fig. 5.

In Step 1, first, data is input into a microcomputer (not shown). The data is selected from, for example, design specification and the like, taking into consideration a design of a headlamp itself and a design of an automobile equipped with the headlamp. As the data, there are the kind of the light source 1, the size and surface shape of the reflector 2, 6, 7, the reflection surface block division of the reflector 2, 6, 7, the size, surface shape and back surface shape of the lens 3, 4, 5, a target brightness-intensity distribution pattern, and the like.

Next, in Step 2, a processing is performed that the reflector is provisionally set on the basis of the data input in the above Step 1 such that a target brightness-intensity distribution pattern (Figs. 10, 11) can be obtained by combination with the flat lens 2. The temporary setting of the reflector 2 is automatically performed on the basis of the control point in the free curved surface of NURBS, the normal vector and the like.

Then, in Step 3, a processing is performed that the flat lens 3 is replaced with the concave lens 4 or the convex lens 5 while the provisionally set reflector 2 which has been obtained by the processing in the above Step 2 is maintained. At this time, the brightness-intensity distribution pattern (Fig. 2, 3) of an image can be obtained through calculation by Ray-tracing technique, the image to be produced by reflecting light L1 from a modeled light source 1 by the reflector 2 and to refract the reflected light L2 at the concave lens 4 or the convex lens 5 so that the refracted light reaches a screen (not shown) ahead of the lens as the projecting light L4, L5.

Then, in Step 4, a processing is performed that a displacement between the target brightness-intensity pattern (Fig. 11) obtained by the processing in the above Step 2 and the brightness-intensity distribution pattern (Fig. 2 or 3) obtained by the processing in the above Step 3 is calculated. The displacement occurs due to the light refraction in the concave lens 4 or the convex lens 5, as has been explained previously with reference to Figs. 1 to 3.

Next, in Step 5 and Step 6, a processing is performed that the reflector 6 for the concave lens 4 or the reflector 7 for the convex lens 5 is primarily set in place of the provisionally set reflector 2 such that the displacement which has been calculated by the processing in the above Step 4 becomes 0. That is, the free curved surfaces of NUBBS for the reflector 2, 6, 7 are automatically modified and deformed to form optimal free curved surfaces of NURBS such that the brightness-intensity distribution pattern (Fig. 2 or Fig. 3) obtained by the processing in the above Step 3 is coincide with the target brightness-intensity distribution pattern (Fig. 11) obtained by the processing in the above Step 2. In the processings in Step 5 and Step 6, Ray-tracing calculation is repeated where the light L1, L14, L15 from the light source 1 is reflected by the reflector 2, 6, 7, the reflected light L2, L24, L25 is refracted by the lens 3, 4, 5 and the refracted light reaches a screen (not shown) ahead of the lens as the projecting light L3, L4, L34, L5, L35.

Next, when the displacement becomes almost 0, the primarily set of the reflector 6 for the concave lens 4 or the reflector 7 for the convex lens 5 is completed. In Step 7, data of the primarily set reflector 6 for the concave lens 4 or the primarily reflector 7 for the convex lens 5 is output.

In this manner, according to the method for manufacturing a reflector of the present invention in the embodiment, the reflector 6, 7 for a headlamp whose interior is made difficult to see to some extent without losing a high brightness feeling of inside metal and which has a high degree of freedom on an optical design can be manufactured. In addition, the processings in the above-mentioned Steps 2, 3, 4, 5, 6, namely the step of provisionally setting the reflector 2, the step of calculating displacement, and the step of primarily setting the reflector 6, 7, are performed according to a predetermined program in a computer so that the above-mentioned reflector 6, 7 for a headlamp can be manufactured with a high accuracy, at a high speed and with a high degree of freedom.

Next, results which have been obtained by trying optical design simulations for headlamps having the concave lens and the convex lens of the present invention and a headlamp having a conventional flat lens will be explained in detail.

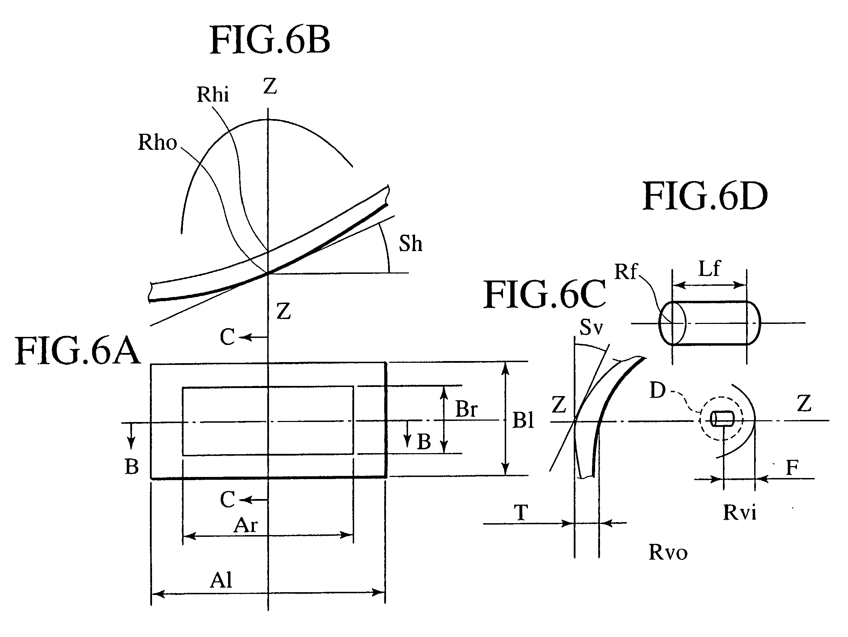

Fig. 6 is an explanatory diagram showing data input for optical design simulations.

Sizes for data in Fig. 6 are respectively as follows:
Ar = length size (mm) of reflector 2, 6, 7
Br = height size (mm) of reflector 2, 6, 7
A1 = length size (mm) of lens 3, 4, 5
B1 = height size (mm) of lens 3, 4, 5
T = thickness size (mm) (in optical axis Z-Z) of lens 3, 4, 5
Sv = side surface inclination angle (°) (in optical axis Z-Z) of lens 3, 4, 5
Sh = flat surface inclination angle (°) (in optical axis Z-Z) of lens 3, 4, 5
Rvo = radius of curvature (mm) in side view optical axis Z-Z of surface of lens 3, 4, 5
Rho = radius of curvature (mm) in plan view optical axis Z-Z of surface of lens 3, 4, 5
Rvi = radius of curvature (mm) in side view optical axis Z-Z of back surface of lens 3, 4, 5
Rhi = radius of curvature (mm) in plan view optical axis Z-Z of back surface of lens 3, 4, 5
F = focal distance (mm)
Lf = length (mm) of filament
Rf = radius (mm) of filament

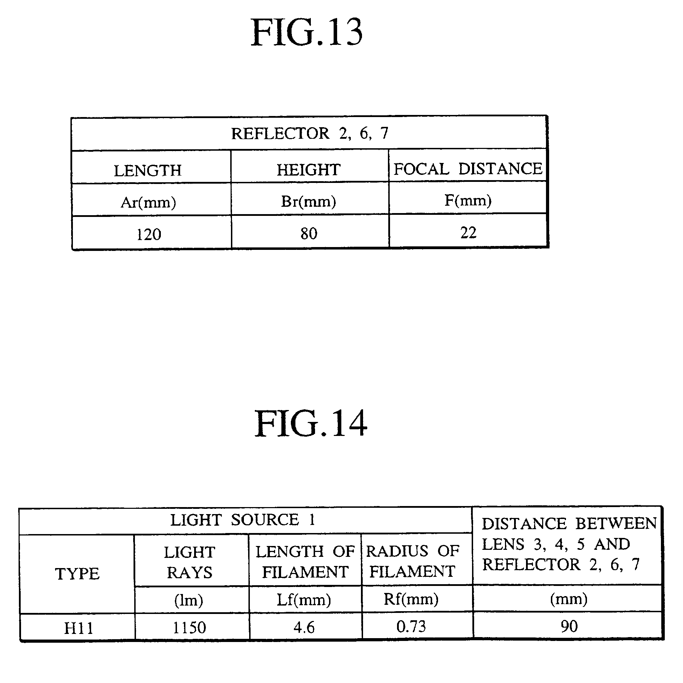

The above-mentioned data is input as values shown in Fig. 13, Fig. 14 and Fig. 15. Incidentally, as conditions, EC brightness-intensity distribution standard ECEReg. is met and the sizes of reflectors and light sources are identical.

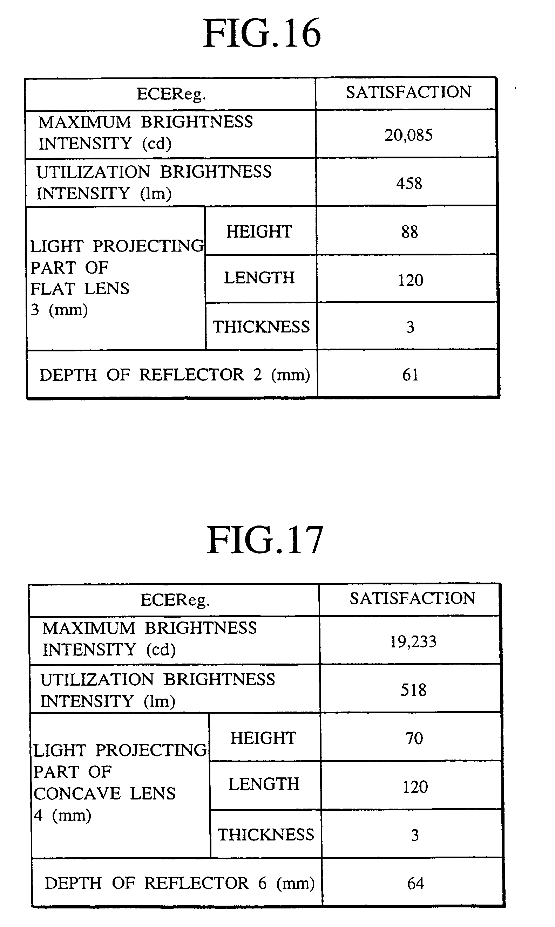

According to the headlamp having a flat lens, The results shown in Fig. 16 can be obtained.

Also, according to the headlamp having the concave lens of the present invention, the results shown in Fig. 17 can be obtained.

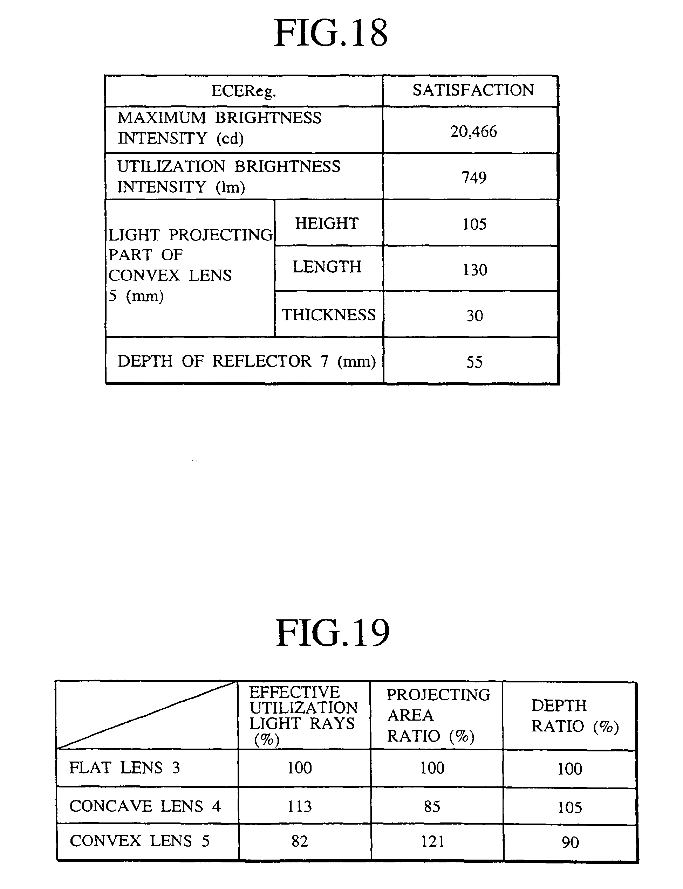

Furthermore, according to the headlamp having the convex lens, the results shown in Fig. 18 can be obtained.

The following results shown in Fig. 19 can be obtained collectively in view of the above-mentioned Fig. 16, Fig. 17 and Fig. 18.

As apparent from Fig. 19, in a case that the sizes of the reflectors are set to be constant, the following conclusion can be obtained.

That is, in the headlamp of the present invention having the concave lens, the utilization light rays is increased by 13 %, the light projecting area of the lens is reduced by 15 %, and the depth of the reflector is increased by 5 %, as compared with the conventional headlamp having the flat lens. On the other hand, in the headlamp of the present invention having the convex lens, the utilization light rays is decreased by 18 %. The light projecting area of the lens is increased by 21 % and the depth of the reflector is reduced by 10 %, as compared with the conventional headlamp having the flat lens.

As mentioned forth above, when it is desired to make brighter and make the light emitting area of a lens smaller, a headlamp using a concave lens is suitable. Also, when it is desired to make the depth of a reflector smaller and make the light projecting area of a lens larger, a headlamp using a convex lens is suitable.

Figs. 7A and 7B show a modified embodiment of a headlamp of the present invention, where Fig. 7A is a front view and Fig. 7B is a sectional view taken along line B-B in Fig. 7A.

The headlamp of the modified embodiment is constituted by combination of a concave lens 4 and a reflector 6 for the concave lens 4, and a convex lens 5 and a reflector 7 for the convex lens 5.

Incidentally, in the above embodiments, the headlamp which can obtain the brightness-intensity distribution pattern of a low light rays has been explained, but the present invention is applicable to a headlamp which can obtain a brightness-intensity distribution pattern of a high light rays.

As apparent from the above, the headlamp obtained by the inventive method makes it difficult to some extent to see an inside thereof without losing a high brightness feeling of inside metal and has a high degree of freedom on optical system design.

Also, according to the method of the present invention, a reflector for a headlamp whose inside is made difficult to some extent to see without losing a high brightness feeling of inside metal and which has a high degree of freedom on optical system design can be manufactured.

## Claims

1. A design method for designing the reflection surface of the reflector (6; 7) of a headlamp having a light source, a curved lens and a reflector, **characterized in that** the method has the steps of:
providing a reflector (2) with a reflection surface about an optical axis (Z-Z) for reflecting light;
providing a flat lens (3) about said optical axis (Z-Z) opposite to said reflector (2) for projecting a first brightness-intensity distribution pattern based on light rays emitted by said light source (L2, L3), reflected by said reflection surface and transmitted through said flat lens (3);
setting up said reflection surface for said first brightness-intensity distribution pattern to conform to a target brightness-intensity distribution pattern;
replacing said flat lens (3) with said curved lens (4; 5) projecting a second brightness-intensity distribution pattern based on light rays emitted by said light source (L4; L5), reflected by said reflection surface and transmitted through said curved lens (4; 5), the second brightness-intensity distribution pattern being different from said first brightness-intensity distribution pattern;
calculating the difference between said target brightness-intensity distribution pattern and said second brightness-intensity distribution pattern; and
determining the design of said reflection surface of said reflector by zeroing said difference so that the brightness-intensity distribution pattern based on light rays reflected by said reflector and projected by said curved lens conforms with said target brightness-intensity distribution pattern.

## Patentansprüche

1. Auslegungsverfahren zum Auslegen der Reflexionsoberfläche eines Reflektors (6; 7) eines Scheinwerfers aufweisend eine Lichtquelle, eine gewölbte Linse und einen Reflektor, **dadurch gekennzeichnet, dass** das Verfahren die Schritte aufweist:
Vorsehen eines Reflektors (2) mit einer um eine optische Achse (Z-Z) angeordnete Reflexionsoberfläche zum Reflektieren von Licht;
Vorsehen einer flachen Linse (3) um die optische Achse (Z-Z) gegenüberliegend zu dem Reflektor (2) zum Abbilden eines ersten Helligkeitsintensität-Verteilungsmusters basierend auf den von der Lichtquelle (L2, L3) ausgesandten, von der Reflexionsoberfläche reflektierten und durch die flache Linse (3) übertragenden Lichtstrahlen;
Anordnen der Reflexionsoberfläche für das erste Helligkeitsintensität-Verteilungsmuster, um einem Ziel-Helligkeitsintensität-Verteilungsmuster zu genügen;
Austauschen der flachen Linse (3) mit der gewölbten Linse (4; 5), die basierend auf den von der Lichtquelle (L4, L5) ausgesandten, von der Reflexionsoberfläche reflektierten und durch die gewölbte Linse (4; 5) übertragenden Lichtstrahlen ein zweites Helligkeitsintensität-Verteilungsmuster abbildet, wobei das zweite Helligkeitsintensität-Verteilungsmuster unterschiedlich zu dem ersten Helligkeitsintensität-Verteilungsmuster ist;
Berechnen des Unterschiedes zwischen dem Ziel-Helligkeitsintensität-Verteilungsmuster und dem zweiten Helligkeitsintensität-Verteilungsmuster;
Bestimmen der Auslegung der Reflexionsoberfläche des Reflektors durch Nullen des Unterschiedes derart, dass das auf den von dem Reflektor reflektierten und von der gewölbten Linse abgebildeten Lichtstrahlen basierende Helligkeitsintensität-Verteilungsmuster dem Ziel-Helligkeitsintensität-Verteilungsmuster entspricht.

## Revendications

1. Procédé de conception pour concevoir la surface de réflexion du réflecteur (6 ; 7) d'un phare comportant une source de lumière, une lentille incurvée et un réflecteur, **caractérisé en ce que** le procédé comporte les étapes consistant à :
fournir un réflecteur (2) avec une surface de réflexion autour d'un axe optique (Z-Z) pour réfléchir la lumière ;
fournir une lentille plate (3) autour dudit axe optique (Z-Z) opposée audit réflecteur (2) pour projeter un premier motif de répartition d'intensités de luminosité basé sur des rayons de lumière émis par ladite source de lumière (L2, L3), réfléchis par ladite surface de réflexion et transmis à travers ladite lentille plate (3) ;
établir ladite surface de réflexion pour que ledit premier motif de répartition d'intensités de luminosité se conforme à un motif de répartition d'intensités de luminosité cible ;
remplacer ladite lentille plate (3) par ladite lentille incurvée (4 ; 5) projetant un deuxième motif de répartition d'intensités de luminosité basé sur les rayons de lumière émis par ladite source de lumière (L4 ; L5), réfléchis par ladite surface de réflexion et transmis à travers ladite lentille incurvée (4 ; 5), le deuxième motif de répartition d'intensités de luminosité étant différent dudit premier motif de répartition d'intensités de luminosité ;
calculer la différence entre ledit motif de répartition d'intensités de luminosité cible et ledit deuxième motif de répartition d'intensités de luminosité ; et
déterminer la conception de ladite surface de réflexion dudit réflecteur en annulant ladite différence de sorte que le motif de répartition d'intensités de luminosité basé sur les rayons de lumière réfléchis par ledit réflecteur et projetés par ladite lentille incurvée soit en conformité avec ledit motif de répartition d'intensités de luminosité cible.
